# EUROPÄISCHE PATENTSCHRIFT

(11) **EP 2 133 486 B1**
(45) Veröffentlichungstag und Bekanntmachung des Hinweises auf die Patenterteilung: **08.10.2014**
(21) Anmeldenummer: 09007798.3
(22) Anmeldetag: 12.06.2009
(51) Int. Cl.: E04F 13/14, E04C 2/288, B44F 9/04, B44C 5/04

(54) **Monolithisches Leichtbauprofil aus einem Leichtbauwerkstoff**
Monolithic lightweight profile made of light building material
Un profilé monolithique pour construction légère en matériau de construction léger

(30) Priorität: 12.06.2008 DE 102008027986
(43) Veröffentlichungstag der Anmeldung: 16.12.2009
(73) Patentinhaber: DAW SE, 64372 Ober-Ramstadt (DE)
(72) Erfinder: Mende, Herbert, 64385 Reichelsheim (DE)
(74) Vertreter: Pfenning, Meinig & Partner GbR

(56) Entgegenhaltungen:
- EP-A2- 0 731 237
- DE-A1- 4 036 966

## Beschreibung

Die Erfindung betrifft ein monolithisches Leichtbauprofil aus einem Leichtbauwerkstoff als Kern und einer dauerhaft mit dem Kern verbundenen Deckschicht, die eine Dicke von mindestens 4 mm aufweist. Diese beiden Schichten können gegebenenfalls durch einen Klebstoff verbunden werden.

Polystyrolkernprofile mit den verschiedensten Beschichtungen, wie z.B. mineralischer Zugmasse, Zugmasse auf Dispersionsbasis und eingesandetem Epoxidharz sind auf dem Markt erhältlich. Zusätzlich werden Polyurethan-Kerne eingesetzt und auch Profile, die nicht beschichtet sind.

So ist aus dem Stand der Technik ein Profil, dass zu fast 100% aus einem Glasgranulat besteht, bekannt, das in einem mehrstufigen Prozess durch Einwirkung erhöhter Temperatur zu Platten gepresst und dann zu Profilen verarbeitet wird (Technodec^{®} der Firma Technodec Platten & Profile GmbH & Co KG).

Weitere bekannte Profile werden aus einem mineralischen Leichtbaustoff hergestellt, die spezielle Bindemittel enthalten (Prokera^{®} Gößnitzer Stuckprofile).

Auch Profile auf Basis von Blähglasgranulaten sowie weiteren mineralischen Leichtbaustoffen sind bereits beschrieben worden.

Alle bisher eingesetzten Materialien bestehen aber im Wesentlichen aus einem Material, dass gegebenenfalls noch eine Beschichtung aufweist. Nachteilig ist dabei, dass aufgrund ihres Aufbaus und der beschriebenen Materialeigenschaften ein höheres Gewicht resultiert. Ferner sind die Isolationseigenschaften unbefriedigend.

Ausgehend hiervon ist es Aufgabe der vorliegenden Erfindung, die Nachteile des Standes der Technik zu beseitigen und Leichtbauprofile mit viel geringerem Gewicht bereitzustellen, die unter Anderem auch isolierende Eigenschaften besitzen können und sich durch eine steinähnliche Oberfläche auszeichnen.

Diese Aufgabe wird durch das monolithische Leichtbauprofil mit den Merkmalen des Anspruchs 1 gelöst. Weitere vorteilhafte Ausführungen sind in den abhängigen Ansprüchen 2 bis 14 enthalten.

Erfindungsgemäß wird ein monolithisches Leichtbauprofil bereitgestellt, das aus einem Kern besteht, der aus einem Leichtbauwerkstoff gebildet ist oder diesen beinhaltet. Dieser Kern ist auf mindestens einer Seite bzw. Fläche mit einer Deckschicht, die eine Dicke von mindestens 4 mm aufweist, verbunden. Vorteile dieses Komposits sind die sehr guten Isolationseigenschaften wie auch das geringe Gewicht. Durch die erfindungsgemäß eingesetzten Oberflächenmaterialien wird eine leichte Bearbeitbarkeit der Profile gewährleistet und so die optisch ansprechende Oberflächengestaltung ermöglicht.

Vorzugsweise ist der Leichtbauwerkstoff ausgewählt aus Polystyrol (EPS), Polyurethan-Schaum, Melaminharzschaum, anorganischem Schaum, Calciumsilicatschäumen, Glasschaum, Wasserglasschaum, Siliconschaum, mineralischem Dämmstoff aus Sand, Kalk, Zement und Wasser (Multipor^{®}), extrudiertem Polystyrol-Hartschaum, sonstigen dem Fachmann bekannten Leichtbaustoffen, unterschiedlichsten organischen und anorganischen Stoffen und/oder Mischungen hiervon.

Dieser Leichtbauwerkstoff kann aus mehreren Teilen zusammengesetzt sein, er kann gegossen und/oder gepresst sein. Dies ermöglicht eine große Bandbreite an Gestaltungsmöglichkeiten. Zusätzlich kann jeder Werkstoff durch die verschiedenen Herstellungsarten in Abhängigkeit von seinen Eigenschaften optimal verarbeitet werden.

In Kombination mit einem Leichtbau-Kern wird so ein Materialkomposit erhalten, das aus zwei Materialien bestehend, ein viel geringeres Gewicht als ein Bauteil aus nur einem Material aufweist und dennoch eine sehr stabile Oberfläche besitzt. Durch den Leichtbau-Kern erhält das monolithische Profil zusätzlich besonders gute isolierende Eigenschaften. Dieser Leichtbau-Kern kann aus geschäumtem Polystyrol bzw. aus jedem anderen Leichtbaustoff bestehen oder diesen enthalten.

Die Deckschicht ist bevorzugt aus Gips, auf Basis von Glas, Microhohlglaskörpern, Recyclingglas mit 5 bis 50% Bindemitteln, auf Basis von Blähglas- und Glasgranulaten, aus mineralischem Leichtbaustoff, aus haufwerksporigen Baustoff, aus organischen oder anorganischen Stoffen und Mischungen hiervon gebildet. Die als Deckmaterialien eingesetzten Stoffe sind fräsbar und können somit leicht durch übliche spanabhebende Werkzeuge und Verfahren bearbeitet werden.

Ein besonders geeignetes Material für die Deckschicht wird unter der Bezeichnung Capapor^{®} vertrieben. Capapor^{®} wird von den Deutschen Amphibolin-Werken von Robert Murjahn Stiftung &Co KG aus Ober-Ramstadt hergestellt. Die Materialkomposition von Capapor^{®} beinhaltet Glas, Microhohlglaskörpern oder Recyclingglas, das mit 5 bis 50% Bindemitteln, insbesondere Polyurethan, Harzen, Epoxid-Harzen, Dispersionen bzw. Zement versetzt wird. Dieses Material zeichnet sich durch seine steinähnliche wie auch seine optisch ansprechende und leicht zu bearbeitende Oberfläche aus. Durch die Verwendung von Recyclingglas wird ferner dem Umweltschutzgedanken Rechnung getragen.

Der vorzugsweise haufwerksporige Baustoff wird aus einem Leichtfüllstoff und einem Bindemittel mit Rohdichten von 100 bis 700 kg/m³ gebildet. Dieses Material weist eine offenporige und wasserdurchlässige Struktur auf, die im Außeneinsatzbereich besonders vorteilhaft ist, da Regenwasser leicht abfließen kann und nicht an der Hauswand verbleibt.

Im Rahmen der Herstellung des monolithischen Leichtbauprofils kann die Deckschicht mit dem Kern verklebt oder verbunden sein. Dies kann mittels jeglicher Art von Klebstoffen bzw. Leimen wie auch durch Aufpressen oder -gießen erfolgen. Somit ist in Abhängigkeit vom Material eine große Bandbreite für die Verarbeitungsmöglichkeiten gegeben.

Als Klebstoff wird vorzugsweise Polyurethan, hydraulische Bindemittel, insbesondere Zement, Kunstharz-Dispersionen, Kunstharz-Klebstoffe, Reaktionsharze wie auch Kleber mit anorganischen Komponenten eingesetzt. Diese sind in dem benötigten Temperaturbereich besonders stabil und sehr gut zu verarbeiten. Ferner können sie für vielfältige Materialkombinationen eingesetzt werden.

Eine weitere mögliche Ausführungsform des Leichtbaustoffes ist **dadurch gekennzeichnet, dass** die Deckschicht profiliert ist. Auf diese Weise wird eine ansprechende Oberflächenstruktur ermöglicht, die, angepasst an den Einsatzort und die gewünschte Optik, variiert werden kann.

Diese Ausführungsform lässt sich mittels spanabhebender Bearbeitung herstellen. Die durch übliche spanabhebende Werkzeuge und Verfahren herzustellenden Oberflächenstrukturen sind für den Fachmann leicht und flexibel, gegebenenfalls auch vor Ort, zu bearbeiten.

In einer vorteilhaften Weiterbildung ist der plattenförmig gebildete Kern an mindestens einer Seite mit einer Deckschicht versehen. Durch die Verwendung eines leichten, Poren aufweisenden Kerns lässt sich das Gewicht des Leichtbauprofils stark reduzieren.

Das erfindungsgemäße monolithische Leichtbauprofil, wie vorangehend beschrieben, ist als Fassadenprofil einsetzbar. Die steinähnliche Oberfläche wie auch die leichte Bearbeitbarkeit der verschiedenen Materialien und Materialkombinationen ermöglichen eine vielfältige Verwendung der Profile abhängig von der zu gestaltenden Fassade.

Anhand der folgenden Figuren soll der anmeldungsgemäße Gegenstand näher erläutert werden, ohne diesen auf die in den Ausführungsbeispielen dargestellten Varianten einzuschränken.
- Fig. 1: zeigt verschiedene Ausführungsformen für monolithische Leichtbauprofile, die aus einem Kern und einer Deckschicht bestehen, die mit einem Kleber verbunden sind.
- Fig. 2: zeigt verschiedene Ausführungsformen für monolithische Leichtbauprofile, die aus einem Kern und einer Deckschicht bestehen.

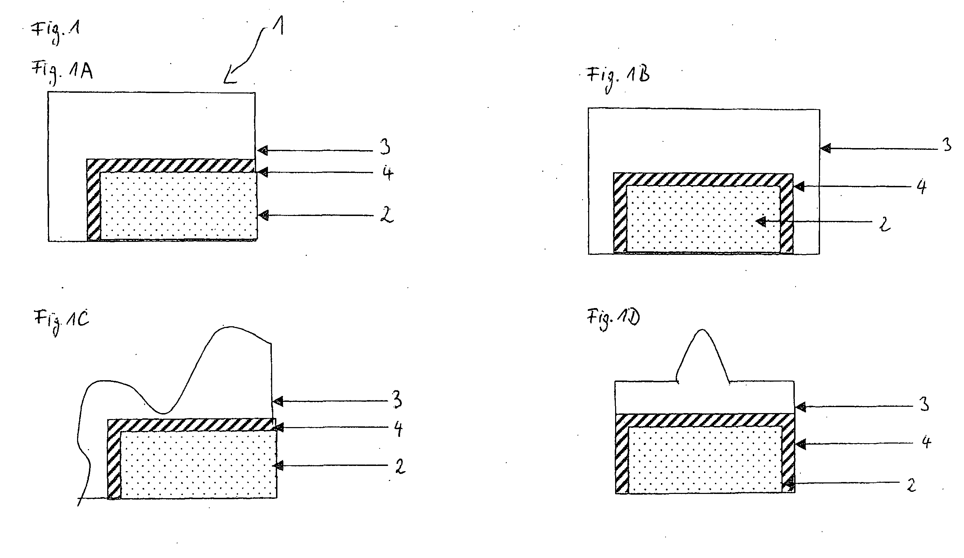

Fig. 1A zeigt einen Schnitt durch ein quaderförmiges monolithisches Leichtbauprofil 1 mit einer möglichen Kombination aus Deckschicht 3, Kleber 4 und Kern 2. Hier ist der Kern 2 über mindestens zwei Flächen mit der Deckschicht 3 verbunden.

In Fig. 1B ist ein Schnitt durch ein monolithisches Leichtbauprofil 1 mit einer weiteren möglichen Kombination aus Deckschicht 3, Kleber 4 und Kern 2 dargestellt. In diesem Fall wird ein quaderförmiges monolithisches Leichtbauprofil 1 erzeugt, in dem der Kern 2 über mindestens drei Flächen mit der Schale 3 verbunden ist. Es resultiert ein quaderförmiges monolithisches Leichtbauprofil 1.
In Fig. 1C ist einen Schnitt durch ein monolithisches Leichtbauprofil 1 in einer weiteren möglichen Variante abgebildet. Hier weist die Deckschicht 3 eine nicht-symmetrische, wellenartige Form auf. Der Kern 2 ist über mindestens zwei Flächen mit der Deckschicht 3 verbunden.

Fig. 1D zeigt einen Schnitt durch ein monolithisches Leichtbauprofil 1 in einer weiteren Kombination aus partiell gewölbter Deckschicht 3, Kleber 4 und Kern 2. Hier ist die Deckschicht 3 über mindestens eine Fläche mit dem Kern 2 verbunden.

Für die zur Erzeugung der in Fig. 1A-1D dargestellten Leichtbauprofile 1 wird der Leichtbauwerkstoff 2 mittels Klebstoff 4 mit der Deckschicht bzw. Schale 3 verbunden. Aus der Deckschicht 3 kann gegebenenfalls das Profil gefräst werden, sofern die endgültige Form nicht schon vorher vorgegeben ist.

Nachfolgend sind beispielhaft Materialkombinationen für die in Fig. 1A bis 1D angeführt:
1. Ein Polystyrolschaum-Kern 2 wird mittels Polyurethan-Kleber 4 auf eine Capapor^{®}-Schale 3 geklebt. Das Profil der Schale 3 kann schon vorgegeben sein, oder durch nachträgliche Bearbeitung wie zum Beispiel fräsen erhalten werden.
2. Ein Polyurethanschaum-Kern 2 wird mittels Polyurethan-Kleber 4 auf eine Capapor^{®}-Schale 3 geklebt. Das Profil der Schale 3 kann schon vorgegeben sein, oder durch nachträgliche Bearbeitung wie zum Beispiel fräsen erhalten werden.
3. Ein Multipor^{®}-Kern 2 wird mittels Polyurethan-Kleber 4 auf eine Capapor^{®}-Schale 3 geklebt. Das Profil der Schale 3 kann schon vorgegeben sein, oder durch nachträgliche Bearbeitung wie zum Beispiel fräsen erhalten werden.
4. Ein Polystyrolschaum-Kern 2 wird mittels hydraulischen Bindemittels (wie Zement) 4 auf eine Capapor^{®}-Schale 3 geklebt. Das Profil der Schale 3 kann schon vorgegeben sein, oder durch nachträgliche Bearbeitung wie zum Beispiel fräsen erhalten werden.
5. Ein XPS(extrudierte Polystyrol Hartschaum)-Kern 2 wird mittels hydraulischem Bindemittel (wie Zement) 4 auf eine Capapor^{®}-Schale 3 geklebt. Das Profil der Schale 3 kann schon vorgegeben sein, oder durch nachträgliche Bearbeitung wie zum Beispiel fräsen erhalten werden.
6. Ein Glasschaum-Kern 2 wird mittels Reaktionsharz 4 auf eine Schale 3 geklebt. Das Profil der Schale 3 kann schon vorgegeben sein, oder durch nachträgliche Bearbeitung wie zum Beispiel fräsen erhalten werden.
7. Ein Melaminharzschaum-Kern 2 wird mittels Reaktionsharz 4 auf eine Capapor^{®}-Schale 3 geklebt. Das Profil der Schale 3 kann schon vorgegeben sein, oder durch nachträgliche Bearbeitung wie zum Beispiel fräsen erhalten werden.
8. Ein Polystyrolschaum-Kern 2 wird mittels Polyurethan 4 auf eine Schale 3 geklebt. Das Profil der Schale 3 kann schon vorgegeben sein, oder durch nachträgliche Bearbeitung wie zum Beispiel fräsen erhalten werden.

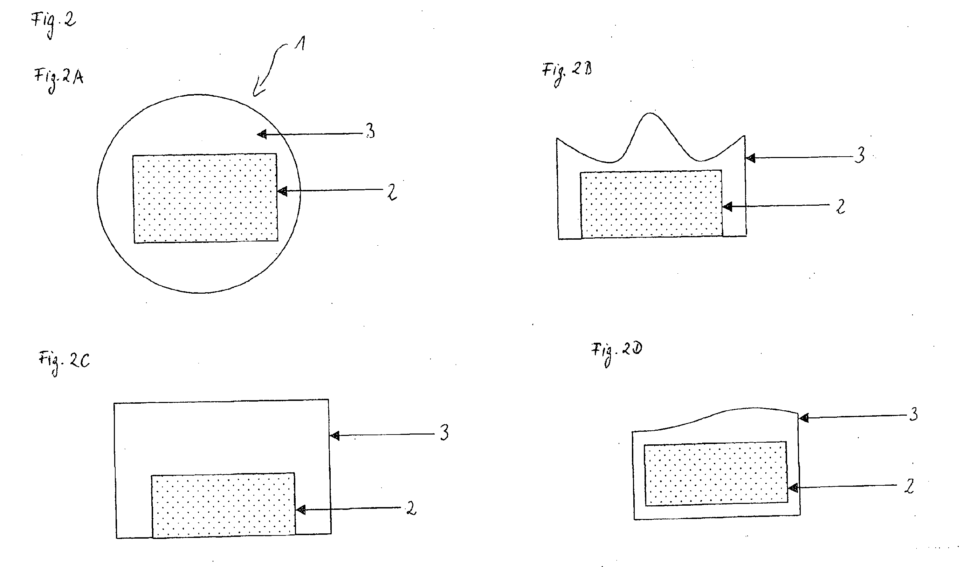

In Fig. 2A ist ein Schnitt durch ein ovales monolithisches Leichtbauprofil 1 dargestellt. Hier wird der Kern 2 in eine Deckschicht 3 eingebracht und ist über mindestens vier Flächen mit dieser verbunden.

Fig. 2B zeigt einen Schnitt durch ein monolithisches Leichtbauprofil 1 mit einem Kern 2, der in eine Deckschicht 3 eingebracht wurde und eine wellenförmige Oberfläche aufweist. Hier ist der Kern 2 über mindestens drei Flächen mit der Schale 3 verbunden.

In Fig. 2C ist ein Schnitt durch ein monolithisches Leichtbauprofil 1 mit einem Kern 2, der in eine Deckschicht 3 eingebracht wurde, abgebildet. Hier ist der Kern 2 über mindestens drei Flächen mit der Schale 3 verbunden. Es resultiert ein quaderförmiges Leichtbauprofil 1.

Fig. 2D stellt einen Schnitt durch ein monolithisches Leichtbauprofil 1 mit einem quaderförmigen Kern 2, der in eine Deckschicht 3 eingebracht wurde, dar. In diesem Fall ist der Kern 2 über mindestens vier Flächen mit der Schale 3 verbunden.

Für die Herstellung der in Fig. 2A-2D gezeigten Leichtbauprofile 1 wird der Leichtbauwerkstoff 2 in eine mit der Deckschicht bzw. Schale 3 gefüllte Negativ-Form gegeben. Nach dem Herauslösen weist das monolithische Leichtbauprofil 1 die diesbezügliche Positiv-Form auf.

Nachfolgend sind beispielhaft Materialkombinationen für die in Fig. 2A bis 2D angeführt:
1. Ein Polystyrolschaum-Kern 2 wird in eine Schale 3 gedrückt. Die Verbundstoffkombination 1 härtet aus. Das Profil der Schale 3 kann schon vorgegeben sein, oder durch nachträgliche Bearbeitung wie zum Beispiel fräsen erhalten werden.
2. Ein Polyurethanschaum-Kern 2 wird in eine Schale 3 gedrückt. Die Verbundstoffkombination 1 härtet aus. Das Profil der Schale 3 kann schon vorgegeben sein, oder durch nachträgliche Bearbeitung wie zum Beispiel fräsen erhalten werden.
3. Ein Multipor^{®}-Kern 2 wird in eine Schale 3 gedrückt. Die Verbundstoffkombination 1 härtet aus. Das Profil der Schale 3 kann schon vorgegeben sein, oder durch nachträgliche Bearbeitung wie zum Beispiel fräsen erhalten werden.
4. Ein XPS(extrudierte Polystyrol Hartschaum)-Kern 2 wird in eine Schale 3 gedrückt. Die Verbundstoffkombination 1 härtet aus. Das Profil der Schale 1 kann schon vorgegeben sein, oder durch nachträgliche Bearbeitung wie zum Beispiel fräsen erhalten werden.
5. Ein Glasschaum-Kern 2 wird in eine Schale 3 gedrückt. Die Verbundstoffkombination 1 härtet aus. Das Profil der Schale 3 kann schon vorgegeben sein, oder durch nachträgliche Bearbeitung wie zum Beispiel fräsen erhalten werden.
6. Ein Melaminharzschaum-Kern 2 wird in die Schale 3 gedrückt. Die Verbundstoffkombination 1 härtet aus. Das Profil der Schale 3 kann schon vorgegeben sein, oder durch nachträgliche Bearbeitung wie zum Beispiel fräsen erhalten werden.

## Patentansprüche

1. Monolithisches Leichtbauprofil (1) aus einem Kern (2) aus einem Leichtbauwerkstoff mit, mit auf mindestens einer Seite/Fläche dauerhaft verbundenen Deckschicht (3) mit einer Schichtdicke von mindestens 4 mm.

2. Leichtbauprofil (1) nach Anspruch 1, **dadurch gekennzeichnet, dass** der Leichtbauwerkstoff (2) ausgewählt ist aus Polystyrol (EPS), Polyurethan-Schaum, Melaminharzschaum, anorganischem Schaum, Calciumsilicathydratschäume, Glasschaum, Wasserglasschaum, Siliconschaum, mineralischem Dämmstoff, extrudiertem Polystyrol-Hartschaum und/oder Mischungen hiervon.

3. Leichtbauprofil (1) nach Anspruch 1 oder 2, **dadurch gekennzeichnet, dass** der Leichtbauwerkstoff (2) aus mehreren Teilen zusammengesetzt ist.

4. Leichtbauprofil (1) nach Anspruch 1 oder 2, **dadurch gekennzeichnet, dass** der Leichtbauwerkstoff (2) gegossen ist.

5. Leichtbauprofil (1) nach Anspruch 1 oder 2, **dadurch gekennzeichnet, dass** der Leichtbauwerkstoff (2) gepresst ist.

6. Leichtbauprofil (1) nach mindestens einem der Ansprüche 1 bis 5, **dadurch gekennzeichnet, dass** die Deckschicht (3) aus Gips, auf Basis von Glas, Microhohlglaskörpern, Recyclingglas mit 5 bis 50% Bindemitteln, auf Basis von Blähglas- und Glasgranulaten, aus mineralischem Leichtbaustoff, aus haufwerksporigen Baustoff, aus organischen oder anorganischen Stoffen und Mischungen hiervon gebildet ist.

7. Leichtbauprofil (1) nach Anspruch 6, **dadurch gekennzeichnet, dass** als Bindemittel Polyurethan, Epoxidharz, Dispersionen oder Zement eingesetzt werden.

8. Leichtbauprofil (1) nach Anspruch 6 oder 7, **dadurch gekennzeichnet, dass** der Baustoff (3) aus einem Leichtfüllstoff und einem Bindemittel mit Rohdichten von 100 bis 700 kg/m³ gebildet ist.

9. Leichtbauprofil (1) nach mindestens einem der Ansprüche 1 bis 8, **dadurch gekennzeichnet, dass** die Deckschicht (3) mit dem Kern (2) verklebt und/oder verbunden ist.

10. Leichtbauprofil (1) nach Anspruch 9, **dadurch gekennzeichnet, dass** als Klebstoff (4) Polyurethan, hydraulische Bindemittel, insbesondere Zement, Kunstharz-Dispersionen, Kunstharz-Klebstoffe und/oder Reaktionsharze eingesetzt worden ist.

11. Leichtbauprofil (1) nach mindestens einem der Ansprüche 1 bis 10, **dadurch gekennzeichnet, dass** die Deckschicht (3) profiliert ist.

12. Leichtbauprofil (1) nach Anspruch 11, **dadurch gekennzeichnet, dass** das Profil der Deckschicht (3) durch spanabhebende Bearbeitung hergestellt worden ist.

13. Leichtbauprofil (1) nach mindestens einem der Ansprüche 1 bis 12, **dadurch gekennzeichnet, dass** der Kern (2) plattenförmig gebildet ist und mindestens eine Seite des plattenförmigen Elements mit der Deckschicht (3) versehen ist.

14. Leichtbauprofil (1) nach mindestens einem der Ansprüche 1 bis 13, **dadurch gekennzeichnet, dass** es ein Fassadenprofil ist.

## Claims

1. Monolithic lightweight profile (1) made of a core (2) which is made of a lightweight material, having a cover layer (3) which is permanently joined to at least one side/surface and has a layer thickness of at least 4 mm.

2. Lightweight profile (1) according to claim 1, **characterised in that** the Lightweight material (2) is selected from polystyrene (EPS), polyurethane foam, melamine resin foam, inorganic foam, calcium silicate hydrate foams, glass foam, waterglass foam, silicone foam, mineral insulation material, extruded polystyrene rigid foam and/or mixtures hereof.

3. Lightweight profile (1) according to claim 1 or 2, **characterised in that** the lightweight material (2) is composed of a plurality of parts.

4. Lightweight profile (1) according to claim 1 or 2, **characterised in that** the lightweight material (2) is cast.

5. Lightweight profile (1) according to claim 1 or 2, **characterised in that** the lightweight material (2) is compressed.

6. Lightweight profile (1) according to at least one of the claims 1 to 5, **characterised in that** the cover layer (3) is formed from gypsum, based on glass, micro-hollow glass bodies, recycled glass with 5 to 50% binders, based on expanded glass and glass granulates, from mineral lightweight material, from porous bulk material, from organic or inorganic materials and mixtures whereof.

7. Lightweight profile (1) according to claim 6, **characterised in that** polyurethane, epoxy resin, dispersions or cement are used as binder.

8. Lightweight profile (1) according to claim 6 or 7, **characterised in that** the building material (3) is formed from a lightweight filler and a binder having bulk densities of 100 to 700 kg/m³.

9. Lightweight profile (1) according to at least one of the claims 1 to 8, **characterised in that** the cover layer (3) is glued and/or joined to the core (2).

10. Lightweight profile (1) according to claim 9, **characterised in that** polyurethane, hydraulic binders, in particular cement, synthetic resin dispersions, synthetic resin adhesives and/or reaction resins were used as adhesive (4).

11. Lightweight profile (1) according to at least one of the claims 1 to 10, **characterised in that** the cover layer (3) is profiled.

12. Lightweight profile (1) according to claim 11, **characterised in that** the profile of the cover layer (3) was produced by chip-removing machirung.

13. Lightweight profile (1) according to at least one of the claims 1 to 12, **characterised in that** the core (2) is formed as a sheet and at least one side of the sheet element is provided with the cover layer (3).

14. Lightweight profile (1) according to at least one of the claims 1 to 13, **characterised in that** it is a façade profile.

## Revendications

1. Profilé de construction légère (1) monolithique comportant une partie centrale (2) composée d'un matériau de construction légère, avec une couche de recouvrement (3), reliée durablement, sur au moins un côté/une surface et qui présente une épaisseur de couche d'au moins 4 mm.

2. Profilé de construction légère (1) selon la revendication 1, **caractérisé en ce que** le matériau de construction légère (2) est choisi parmi le polystyrène (EPS), de la mousse de polyuréthane, la mousse de résine mélanine, la mousse inorganique, les mousses d'hydrate de silicate de calcium, la mousse de verre, la mousse de verre soluble, la mousse de silicone, un matériau isolant minéral, la mousse dure extrudée à base de polystyrène et/ou des mélanges de ceux-ci.

3. Profilé de construction légère (1) selon la revendication 1 ou 2, **caractérisé en ce que** le matériau de construction légère (2) est composé de plusieurs parties.

4. Profilé de construction légère (1) selon la revendication 1 ou 2, **caractérisé en ce que** le matériau de construction légère (2) est couplé.

5. Profilé de construction légère (1) selon la revendication 1 ou 2, **caractérisé en ce que** le matériau de construction légère (2) est comprimé.

6. Profilé de construction légère (1) selon au moins l'une quelconque des revendications 1 à 5, **caractérisé en ce que** la couche de recouvrement (3) est formée à partir de plâtre, à base de verre, de microéléments en verre creux, de verre recyclé comprenant 5 à 50 % de liants, à base de granulés de verre soufflé et de granulés de verre, d'un matériau minéral de construction légère, d'un matériau de construction très poreux, de matériaux organiques et inorganiques, et de mélanges de ceux-ci.

7. Profilé de construction légère (1) selon la revendication 6, **caractérisé en ce qu'**on utilise comme liant du polyuréthane, de la résine époxy, des dispersions ou du ciment.

8. Profilé de construction légère (1) selon la revendication 6 ou 7, **caractérisé en ce que** le matériau de construction (3) est formé à partir d'un matériau de remplissage léger et d'un liant présentant des masses volumiques apparentes allant de 100 à 700 kg/m³.

9. Profilé de construction légère (1) selon au moins l'une quelconque des revendications 1 à 8, **caractérisé en ce que** la couche de recouvrement (3) est collée et/ou reliée à la partie centrale (2).

10. Profilé de construction légère (1) selon la revendication 9, **caractérisé en ce qu'**on a utilisé comme colle (4) du polyuréthane, des liants à prise hydraulique, en particulier du ciment, des dispersions de résine synthétique, des colles de résine synthétique et/ou des résines composites.

11. Profilé de construction légère (1) selon au moins l'une quelconque des revendications 1 à 10, **caractérisé en ce que** la couche de recouvrement (3) est profilée.

12. Profilé de construction légère (1) selon la revendication 11, **caractérisé en ce que** le profilé de la couche de recouvrement (3) a été fabriqué par un usinage par enlèvement de matière.

13. Profilé de construction légère (1) selon au moins l'une quelconque des revendications 1 à 12, **caractérisé en ce que** la partie centrale (2) est formée de manière à présenter une forme de plaque, et **en ce qu'**au moins un côté de l'élément présentant une forme de plaque est pourvu de la couche de recouvrement (3).

14. Profilé de construction légère (1) selon au moins l'une quelconque des revendications 1 à 13, **caractérisée en ce que** le profilé de construction légère est un profilé de façade.
